Europäisches Patentamt

European Patent Office

Office européen des brevets

(19)

(11) Veröffentlichungsnummer: **0 149 842 B1**

(12) **EUROPÄISCHE PATENTSCHRIFT**

(45) Veröffentlichungstag der Patentschrift: **17.07.91**

(51) Int. Cl.5: **B25B 27/30, B25B 13/48**

(21) Anmeldenummer: **84116223.3**

(22) Anmeldetag: **22.12.84**

(54) **Werkzeug zur Auswechslung von Stossdämpferpatronen.**

(30) Priorität: **18.01.84 DE 8401242 U**
**05.09.84 DE 8426127 U**

(43) Veröffentlichungstag der Anmeldung:
**31.07.85 Patentblatt 85/31**

(45) Bekanntmachung des Hinweises auf die
Patenterteilung:
**17.07.91 Patentblatt 91/29**

(84) Benannte Vertragsstaaten:
**AT BE CH DE FR GB IT LI LU NL SE**

(56) Entgegenhaltungen:
**DE-U- 8 025 426      DE-U- 8 230 608**
**FR-A- 550 718        US-A- 1 425 796**
**US-A- 3 087 706       US-A- 3 912 224**
**US-A- 3 982 730**

(73) Patentinhaber: **Schmack, Bernhard**
**Fuldaer Strasse 71**
**W-6402 Grossenlüder(DE)**

(72) Erfinder: **Schmack, Bernhard**
**Fuldaer Strasse 71**
**W-6402 Grossenlüder(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Werkzeug zum Montieren und Demontieren einer Schraubenfeder eines Kraftfahrzeugfederbeines, nach dem Oberbegriff des Anspruches 1.

Ein derartiges Werkzeug ist aus der US-A-3 087 706 bekannt. Das bekannte Werkzeug besteht aus einem bzw. einer Mehrzahl von Federspannern, die jeweils eine Gewindespindel mit zwei gegeneinander verschiebbaren Federeingriffselementen aufweisen. Die Federeingriffselemente können mit Hilfe eines Schraubenelementes aufeinander zubewegt werden, wodurch die zu demontierende bzw. montierende Feder zusammengedrückt wird.

Der Erfindung liegt die Aufgabe zugrunde, ein Werkzeug der eingangs genannten Art zu schaffen, welches bei einfachem Aufbau und betriebssicherer Handhabbarkeit die Montage und Demontage von Schraubenfedern eines Kraftfahrzeugfederbeines ermöglicht, ohne daß die Gefahr besteht, daß sich die Feder durch ungleiches Anziehen der Federspanner lösen kann, wobei das Werkzeug zu der jeweiligen Form und dem jeweiligen Einbauort der Schraubenfeder anpaßbar sein soll.

Die Lösung dieser Aufgabe erfolgt durch die Merkmale des Anspruches 1.

Dieser Distanzhalter wird bei Gebrauch dieses Werkzeuges mit seinen Hülsen derart auf die Gewindespindeln der Federspanner aufgeschoben, daß sich die Hülsen zwischen den frei auf den Spindeln beweglichen zweiten Federeingriffselementen und den Schraubelementen befinden. Die Hülsen des Distanzhalters sind selbst ebenfalls frei auf den Gewindespindeln beweglich, jedoch durch die Steigung der Schraubenfeder nie auf gleicher Höhe, da die Federeingriffselemente einen Abstand von ungefähr einem Schraubendurchmesser voneinander aufweisen.

Der Distanzhalter ist derart ausgebildet, daß sich der gekrümmte Bügel im wesentlichen in einer Ebene erstreckt, die parallel zur Verbindungslinie der Angriffspunkte des Bügels am Umfang der Hülsen und senkrecht zu einer parallel zur Achse der Schraubenfeder verlaufenden Ebene liegt. Der Angriffspunkt des Bügels am Umfang der Hülsen ist der Mittelpunkt des Bügelquerschnitts, so daß sich der gekrümmte Bügel des Distanzhalters in einer im wesentlichen zur Achse des Kraftfahrzeug-Federbeines senkrechten Ebene um das Federbein herum erstreckt. Der Abstand zwischen den Hülsen des Distanzhalters ist dabei so bemessen, daß die Hülsen außerhalb des Tellers liegen, der unterhalb der Schraubenfeder des Federbeines angeordnet ist. Für Federbeine unterschiedlicher Bauart können daher Werkzeuge unterschiedlicher Abmessung erforderlich werden. Die Länge der einzelnen Hülsen kann verschieden sein, wobei aus Bedienungsgründen insbesondere die am unteren Federeingriffselement, das den höheren Gewindegang der Schraubenfeder erfaßt, angeordnete Hülse länger ausgebildet sein kann. Dann ist es möglich, den Bügel senkrecht zu den Achsen der Hülsen und der Achse der Schraubenfeder anzuordnen. Die Gefahr des Verkantens beim Anspannen wird jedoch dabei erhöht. Deshalb haben sich annähernd gleichlange Hülsen bewährt, so daß der die Hülsen verbindende Bügel durch die Steigung der Schraubenfeder in einer Ebene liegen kann, die in einem Bereich zwischen senkrecht zur Achse der Schraubenfeder und im wesentlichen parallel zur Steigung der Schraubenfeder verläuft.

Bei einer bevorzugten Ausführungsform sind die Federspanner derart ausgebildet, daß die ersten, bei der Montagearbeit oben befindlichen Federeingriffselemente, welche fest mit der Gewindespindel verbunden sind, einen geringeren Abstand von der Achse der Gewindespindel aufweisen als die zweiten auf der Spindel beweglichen Federeingriffselemente, und daß ihre Achse einen spitzen Winkel mit der Normalen zur Bügelebene des Bügels bildet. Dadurch stellen sich die Federspanner nach Ineingriffbringen mit der Schraubenfeder etwas schräg zu deren Achse, indem die Gewindespindeln an ihren unteren, freien Enden einen größeren Abstand voneinander aufweisen als an ihren oberen mit den ersten festen Federeingriffselementen versehenen Enden. Diese Ausbildung bewirkt, daß sich die unteren Enden der Gewindespindeln ungehindert an dem erwähnten Teller vorbeierstrecken. Bei dieser bevorzugten Ausführungsform sind daher auch die Hülsen des Distanzhalters mit einer gewissen Neigung am Bügel angebracht. Da sich die Neigung der Gewindespindeln zur Achse des Federbeines jedoch ändert, je nachdem, welchen Abstand das feste und bewegliche Federeingriffselement voneinander aufweisen, besteht auch die Gefahr, daß sich die Hülsen des Distanzhalters auf den Gewindespindeln verkanten, wenn das Spiel zwischen dem lichten Durchmesser dieser Hülsen und dem Außendurchmesser der Gewindespindeln nicht sehr groß ist. Für eine sichere Abstandshaltung ist ein zu großes Spiel hier aber unerwünscht.

Die Eingriffselemente der Federspanner können einfach als rund geformter Haken mit oder ohne flächige Längserstreckung in Richtung der Federwindung ausgebildet sein. Im letzteren Fall kann leicht eine Verdrehung der Gewindespindel mit den Eingriffselementen erfolgen und dadurch die Haltbarkeit vermindert werden. Durch einen einfachen Haken ohne wesentliche Längserstreckung ist außerdem die Spannkraftbelastung gegenüber einem Haken mit flächiger Längserstreckung vermindert. Bei einem Eingriffselement mit flächiger Längserstreckung besteht jedoch insbesondere bei stärkerer Steigung die Gefahr, daß beim

2

EP 0 149 842 B1

Anspannen das obere Eingriffselement nur an einer Ecke faßt und durch die hohe Belastung und ein Verdrehen aus dem Eingriff mit der Federwindung mit allen nachteiligen Folgen springt. Deshalb ist mindestens eine der Hülsen des Distanzhalters derart an dem Bügel angebracht, daß ihre Achse und die Normale zur Bügelebene in einer ersten Ebene liegen, die senkrecht zur Bügelebene und parallel zur Verbindungslinie der Angriffspunkte des Bügels verläuft, und/oder daß die Achse und die Normale der Bügelebene in einer zweiten Ebene liegen, die senkrecht zu der ersten Ebene durch den jeweiligen Angriffspunkt verläuft. Das bedeutet, daß die Hülsen in Längsrichtung der Verbindungslinie der Angriffspunkte des Bügels an dem Umfang der Hülse und in einer Richtung senkrecht zur Verbindungslinie der Angriffspunkte geneigt sein können. Die Neigung in der Richtung senkrecht zur Verbindungslinie der Angriffspunkte ergibt sich aus den erforderlichen Abmessungen für Federbeine unterschiedlicher Bauart. Aufgrund dieser Ausführungen erhält das jeweilige obere Eingriffselement des Federspanners eine Neigung, die weitgehend der Steigung der Federwindung entspricht, so daß ein Herausspringen verhindert wird. Gewisse Toleranzen können durch den begrenzten Schwenkwinkel bei der Verwendung von zwei Halbbügeln ausgeglichen werden. Die Neigung in Längsrichtung der Verbindungslinie der Angriffspunkte sorgt im wesentlichen dafür, daß die durch die Hülse verlaufenden Gewindespindeln an dem besagten Teller vorbei verlaufen können.

In einem weiteren besonderen Ausführungsbeispiel weicht die Hülsenachse aus der Senkrechten auf die Bügelebene in einer ersten Ebene, die senkrecht zur Bügelebene und parallel zur Verbindungslinie der Angriffspunkte des Bügels verläuft, für die obere Hülse in einem Bereich von bis zu 15° und für die untere Hülse in einem Bereich von bis zu 20°, und/oder in einer zweiten Ebene, die senkrecht zu der ersten Ebene und durch den jeweiligen Angriffspunkt verläuft, für die obere Hülse in einem Bereich von bis 6° und für die untere Hülse in einem Bereich von bis zu 20° ab. Die Hülsen können von der Bügelmitte aus auf die Hülsen betrachtet sowohl nach rechts als auch nach links bzw. von dem Bügel weg und zum Bügel hin geneigt sein, je nachdem, welche Neigung gerade für die Abmessungen der betreffenden Feder notwendig ist. So können sich beispielsweise mit steigendem Federdurchmesser und somit steigendem Federhub beim Zusammenspannen die Winkel zwischen Hülse und Bügel an der unteren Hülse entgegengesetzt zu den Winkeln an der oberen Hülse verändern.

Bei einer weiteren bevorzugten Ausführungsform des Werkzeugsystems besteht der Bügel des Distanzhalters daher aus zwei Halbbügeln, die an ihren den Hülsen abgewandten freien Enden gelenkig miteinander verbunden sind. Die Schwenkbewegung dieser gelenkigen Verbindung ist dabei aber auf einen begrenzten Schwenkwinkel beschränkt, der ausreicht, um ein Verkanten der Hülsen auf den Gewindespindeln zu verhindern. Die Schwenkachse dieser gelenkigen Verbindung verläuft in etwa rechtwinklig zur Achse des Federbeines wie auch zur Verbindungslinie zwischen den Angriffspunkten des Bügels an den Hülsen des Distanzhalters.

Zweckmäßigerweise sind die Enden der Halbbügel des Distanzhalters zur Ermöglichung der begrenzten Schwenkbewegung im Abstand voneinander an der Innenseite der Basis eines U-Profilstückes drehbar angebracht, dessen Schenkelstege als Anschläge für die begrenzte Verschwenkbarkeit der Halbbügel innerhalb dieses Profilstückes dienen.

Im folgenden wird die Erfindung unter Hinweis auf die beigefügten Zeichnungen im einzelnen erläutert. Die Figuren 1 bis 4 zeigen das Werkzeug zum Demontieren und Montieren der Schraubenfeder eines Kraftfahrzeug-Federbeines. Im einzelnen stellen die Figuren dar:

Fig. 1    eine seitliche Gesamtansicht des Werkzeuges zum Demontieren und Montieren der Schraubenfeder an einer im Schnitt gestrichelt dargestellten Schraubenfeder,

Fig. 2    eine Draufsicht auf den Distanzhalter nach Fig. 1,

Fig. 3    eine Seitenansicht des Distanzhalters nach Fig. 2 und

Fig. 4    eine Seitenansicht von rechts auf den Distanzhalter gemäß Fig. 2.

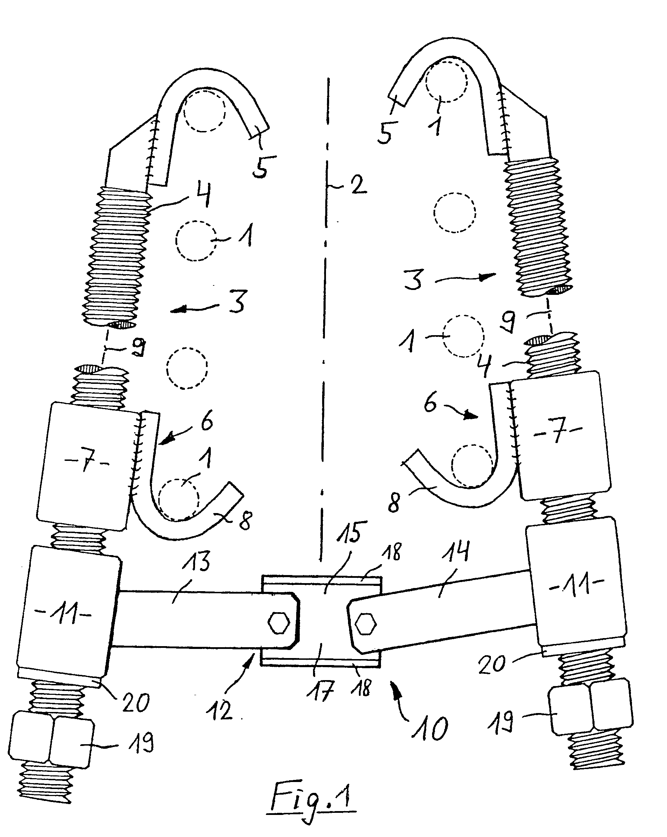

Das erfindungsgemäße Werkzeug zum Demontieren und Montieren der Schraubenfeder wird nachfolgend gemäß den Figuren 1 bis 4 beschrieben.

Jeweils an einer oberen und einer unteren Windung der Schraubenfeder 1 ist ein Werkzeug zum Zusammendrücken der Feder angedeutet, welche Teil eines Kraftfahrzeug-Federbeines ist. Das Werkzeug umfaßt zwei gegenüberliegend an der Schraubenfeder 1 angreifende Federspanner 3, von denen jeder eine Gewindespindel 4 aufweist, an deren oberem Ende ein erstes Federeingriffselement 5 angebracht ist. Dieses erste Federeingriffselement 5 besteht aus einem leicht zum anderen Ende der Gewindespindel 4 hin gebogenen Haken 5, der mit seiner äußeren Fläche beispielsweise mit dem Ende der Gewindespindel 4 verschweißt ist. Frei verschiebbar auf der Gewindespindel 4 ist ein zweites oder unteres Federeingriffselement 6 angeordnet, welches aus einer auf der Gewindespindel 4 verschiebbaren Buchse 7 besteht, an die ein Haken 8 angeschweißt ist, welcher in seiner Ausbildung dem ersten Federeingriffselement 5 entspricht, in seiner Krümmung aber diesem entgegengerichtet ist.

3

Aus der zeichnerisch dargestellten Konstruktion ergibt sich, daß der Abstand des Hakens 8 des zweiten Federeingriffselementes 6 von der Achse 9 der Gewindespindel 4 größer ist als der Abstand des ersten Federeingriffselementes 5 von der Achse 9 der Gewindespindel, und zwar im wesentlichen um ein Maß, welches der Wanddicke der Buchse 7 zuzüglich der Tiefe der Gewindegänge der Gewindespindel 4 entspricht. Hierdurch ergibt sich selbst bei zylindrischer Schraubenfeder 1 bei Eingriff des Werkzeuges mit der Schraubenfeder eine Schrägstellung der Gewindespindel 4 zur Achse 2 der Schraubenfeder in der Weise, daß die Gewindespindel an ihrem unteren freien Ende einen größeren Abstand von der Achse 2 der Schraubenfeder aufweisen als an ihren oberen, die ersten Federeingriffselemente 5 tragenden Enden. Unter den erheblichen Kräften beim Zusammenpressen der Schraubenfeder 1 stellt sich diese Schrägstellung der Federspanner 3 von alleine ein und sollte nicht durch den weiter unten noch zu beschreibenden Distanzhalter behindert werden. In den Figuren wird beispielhaft davon ausgegangen, daß die linken Federeingriffselemente 5 in den tieferen Gewindegang eingreifen. Dies kann in gleicher Weise umgekehrt sein.

Unterhalb der Buchsen 7 der unteren Federeingriffselemente 6 ist auf den Gewindespindeln 4 der Distanzhalter 10 angeordnet. Er besteht aus zwei zylindrischen Hülsen 11, die durch einen Bügel 12 miteinander verbunden sind, der mit den Hülsen 11 beispielsweise verschweißt ist. Die Form des Bügels 12 ist besser aus Fig. 2 zu erkennen. Die Hülsen 11 sind in ihrem Innendurchmesser so bemessen, daß sie sich leicht auf den Gewindespindeln 4 hin- und herbewegen lassen, aber nicht ein unnötig großes Spiel aufweisen, weil sonst die Gefahr besteht, daß sich die Hülsen mit ihren Kanten eventuell in den Gewindegängen der Gewindespindeln verfangen.

Wie aus den zeichnerischen Darstellungen zu erkennen ist, besteht der Bügel 12 aus zwei Halbbügeln 13 und 14, die im Ausführungsbeispiel aus einem Rechteck-Stahlprofil gebogen und an ihren freien Enden durch ein U-Profilstück 15 miteinander verbunden sind. Diese Verbindung ist je mittels einer Schraube 16 ausgeführt, mit der das Ende des jeweiligen Halbbügels 13, 14 gegen die Innenseite der Basis 17 des U-Profilstückes 15 geschraubt ist. Die den zylindrischen Hülsen 11 abgewandten freien Enden der Halbbügel 13 und 14 weisen am U-Profilstück 15 einen gewissen Abstand voneinander auf, und die lichte Innenweite des U-Profilstückes 15 zwischen dessen Schenkelteilen 18 ist etwas größer als die Breite der Halbbügel 13, 14. Dadurch erhalten die Halbbügel 13, 14 innerhalb des U-Profilstückes 15 ein gewisses Bewegungsspiel, indem sie um die Achsen ihrer jeweiligen Schrauben 16 am U-Profilstück 15 soweit verschwenkbar sind, bis sie gegen die Schenkelteile 18 des U-Profilstückes zum Anliegen kommen, die so als Begrenzungsanschläge für die Schwenkbewegung der Halbbügel wirken. Der Abstand zwischen Halbbügel und Schenkelteilen ist in den Figuren unverhältnismäßig groß dargestellt.

Zurückkommend auf Fig. 1 sind schließlich unten auf den Gewindespindeln 4 noch Schraubelemente 19 in Form von Muttern angeordnet, mit denen der Distanzhalter 10 und die zweiten Federeingriffselemente 6 in Richtung auf die ersten Federeingriffselemente 5 vorgeschoben werden können. Zwischen den Hülsen 11 des Distanzhalters 10 und den Muttern 19 sind noch Messingscheiben 20 angeordnet, die die Verschleißeinflüsse durch die Relativbewegung zwischen den Muttern 19 und den Hülsen 11 aufnehmen sollen. Selbstverständlich sollten die Schraubelemente 19 annähernd gleichmäßig angezogen werden.

Die Hülsen 11 des Distanzhalters 10 bewirken zusätzlich noch, daß die Muttern 19 immer einen bestimmten Abstand von den Buchsen 7 der unteren Federeingriffselemente 6 aufweisen. Dies erleichtert die Handhabung des Werkzeuges. Da das Werkzeug am eingebauten Federbein des Kraftfahrzeuges angesetzt wird, befindet es sich im allgemeinen in einer nahezu aufrechten Stellung. Dabei ruht die Schraubenfeder 1 mit dem daran angebrachten Werkzeug auf dem unter der Feder angeordneten Teller des Federbeines, weswegen die unteren Federeingriffselemente 6 sich bei der Arbeit mit dem Werkzeug im wesentlichen immer in der gleichen Höhenlage befinden und nur die oberen Federeingriffselemente 5 beim Zusammendrücken der Feder mit der Spindel nach unten bewegt werden. Das bedeutet, daß auch der Distanzhalter 10 in etwa auf der gleichen Höhenlage verbleibt, und zwar auf der Höhenlage des erwähnten Tellers. Die Hülsen 11 des Distanzhalters bewirken dabei, daß sich die Muttern 19 unterhalb des Tellerrandes befinden und daher für den Einsatz eines Schraubenschlüssels gut zugänglich sind.

Aus dem Vorstehenden ergibt sich, daß der Distanzhalter insgesamt so bemessen sein muß, daß sein Bügel außerhalb des Tellerumfanges liegt. Der Bügel verläuft dabei im wesentlichen in einer Ebene, die schräg zur Achse der Schraubenfeder 1 liegt.

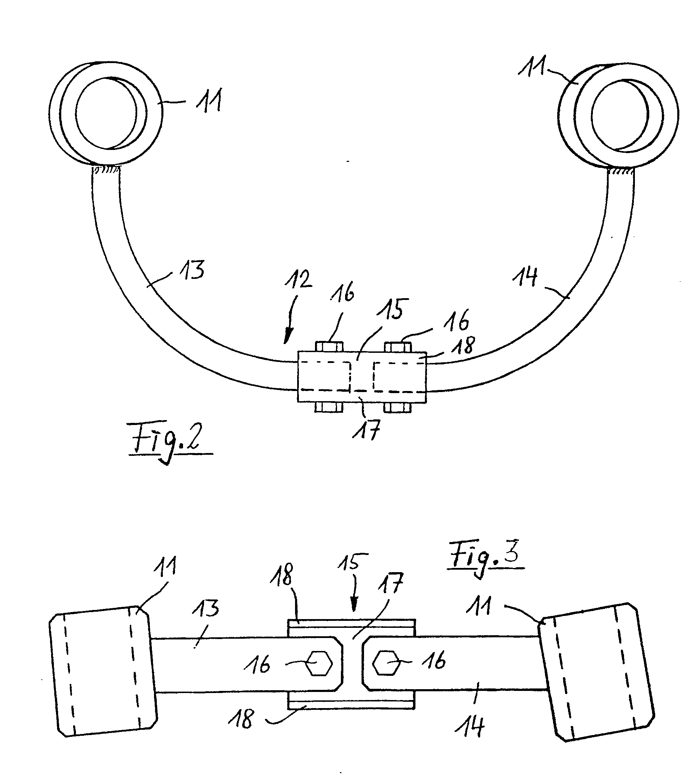

Bereits weiter oben wurde darauf hingewiesen, daß sich bei der Ausführung des Werkzeuges gemäß Abbildung 1 die Federspanner bei Einsatz zwangsläufig auf die in etwa angedeutete Schräglage einstellen. Der Distanzhalter ist nun so ausgebildet, daß er sich dieser Schrägstellung der Gewindespindeln anpassen kann. Hierzu dient in erster Linie die Ausführung des Bügels des Distanzhalters in Form von zwei Halbbügeln, die über das U-Profilstück 15 mit einem begrenzten Schwenkwinkel gelenkig miteinander verbunden sind. Wie aus den Fig. 2 und 3 zu erkennen ist, sind zusätzlich die Hülsen 11 in geneigter Stellung an den Halbbügeln 13 und 14 befestigt. Dabei ist die Neigung der Achsen der Hülsen in bezug auf

4

den Bügel derart, daß die Achsen einen Winkel mit der Normalen zur Bügelebene der Halbbügel bilden, wobei diese Winkel in einer gemeinsamen Ebene liegen. In den Fig. 2 und 3 ist ein Ausführungsbeispiel gezeigt, bei dem die beiden Hülsen 11 zwar unterschiedlich aber gleichsinnig geneigt ausgeführt sind. Dies kann zweckmäßig sein, weil durch die Steigung der Windungen der Schraubenfeder 1 die beiden Federspanner sich grundsätzlich auf etwas unterschiedlichen Höhenlagen befinden, was durch diese Schrägstellung der Hülsen 11 des Distanzhalters 10 berücksichtigt werden kann. Im wesentlichen kommt es darauf an, daß der Distanzhalter 10 auch bei Schrägstellung der Gewindespindeln 4, wobei sich diese Schrägstellung mit weiterem Zusammenbewegen der Federeingriffselemente ändert, ungehindert auf den beiden Gewindespindeln verschoben werden kann.

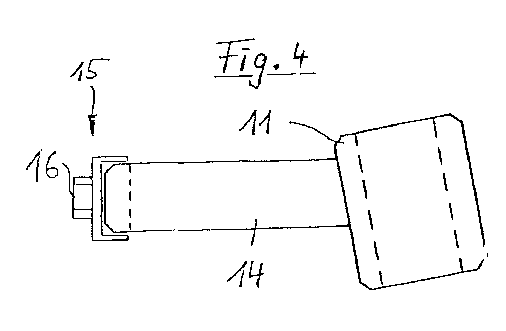

Je nach Größe des Werkzeuges ist wenigstens eine Hülse zusätzlich in einer Ebene geneigt, die senkrecht zu der eben beschriebenen Neigungsebene steht, wodurch es dem oberen Federeingriffselement 5, das eine flächige Längserstreckung aufweist, möglich ist, sich der Steigung der Federwindung anzupassen. Eine Hülse 11 in Verbindung mit dem Bügel 12 ist in Fig. 4 mit der beschriebenen Neigung gezeigt. Geringe Toleranzen können dann noch durch die Schwenkbewegung der Halbbügel ausgeglichen werden. Es wird dadurch verhindert, daß ein oberes Federeingriffselement 5, durch eine große Steigung der Feder 1 bedingt, aus dem Eingriff beim Anspannen herausspringt.

Mittels des vorstehend beschriebenen Aufbaues des Werkzeuges für die Schraubenfedern können mit nur drei Ausführungsformen alle gängigen mit diesen Stoßdämpfern versehenen Modelle bedient werden. Bei diesen Ausführungen sind die Abmessungen in der Tabelle aufgeführt. Das Werkzeug ist so aufgebaut, daß die linken Eingriffselemente in die unteren und die rechten Eingriffselemente gemäß den Figuren 1 bis 3 in die oberen Federwindungen eingreifen. Durch Auflegen des Bügels auf eine horizontale ebene Fläche, so daß die Hülsen über die Kante der Fläche überstehen, wurde die ungefähre Abweichung der Achsen der Hülsen 11 aus der senkrechten Lage zur Auflagefläche gemessen. Dazu wird angenommen, daß der Schnittpunkt der vertikalen Achse der jeweiligen Hülse zur Auflagefläche mit in der Auflagefläche liegend angenommenen horizontalen Achsen den Nullpunkt eines Achsensystems bilden, wobei die eine horizontale Achse parallel zu der Verbindungslinie der Angriffspunkte des Bügels und die andere senkrecht dazu verläuft. Der Nullpunkt des Achsensystems liegt im Inneren der jeweiligen Hülse und die Achse parallel zu der Verbindungslinie der Angriffspunkte sei nachfolgend als Z-Achse und die dazu senkrechte Achse als Y-Achse bezeichnet. Unter Bezugnahme auf Fig. 1 wird die Z-Achse nach rechts und die Y-Achse in die Zeichenebene hinein als positiv angenommen. Die Abweichungen der Hülsenachse aus der Senkrechten sind entsprechend der Richtung mit einer positiven bzw. einer negativen Gradzahl versehen.

Gemäß Fig. 1 ist im vorliegenden Ausführungsbeispiel die linke Hülse die an der Schraubenfeder tiefer liegende und die rechte Hülse die höher liegende Hülse. Dies kann bei einem anderen entsprechenden Werkzeug auch umgekehrt sein.

Bei den in der unten angegebenen Tabelle aufgeführten Ausführungsformen wurden Hülsen mit einer Länge von 36 mm, einem Außendurchmesser von 28 mm und einem Innendurchmesser von 18 mm bei einem Durchmesser der Gewindespindel 4 von 17 mm eingesetzt. Die Breite des Bügels 9 betrug 22 mm und die lichte Innenweite des U-Profilstücks 15 betrug 25 mm bei einer Breite der Schenkelteile 18 von 4 mm. Die Längserstreckung der Federeingriffselemente betrug 25 mm.

Wie der Tabelle zu entnehmen ist, ist die Länge des U-Profilstückes bei zwei Schraubengrößen gleich, jedoch ist in diesem Fall der Abstand der Schrauben 16 verschieden. Nahezu alle Hülsen sind wegen der Federsteigung und der besseren Montierbarkeit in zwei Richtungen geneigt. Die obere (rechte) Hülse weist bezüglich der Schraubenfedersteigung immer die gleiche Abweichung bei allen Schraubenfedergrößen auf, während eine Abweichung aus der Senkrechten bezüglich der schrägen Anordnung für die bessere Montage nur bei den beiden kleineren Schraubenfederdurchmessern gegeben ist. Bei noch größeren Schraubenfederdurchmessern kann diese Abweichung negativ werden. Geringe Toleranzen können immer, wie bereits geschildert, durch die schwenkbare Lagerung der Halbbügel ausgeglichen werden. Die untere (linke) Hülse weist wesentlich stärkere Abweichungen aus der Normalen auf, die von der Größe der Schraubenfeder abhängen. Die Abweichung aus der Normalen wegen der Schrägstellung der Gewindespindeln nimmt mit steigendem Schraubenfederdurchmesser zu. Auch die Abweichungen aus der Normalen wegen der Steigung der Schraubenfederwindungen nimmt mit steigendem Schraubenfederdurchmesser im wesentlichen zu.

Das beschriebene Werkzeug mit dem die beiden Federspanner verbindenden Distanzhalter gestattet ein sicheres Zusammenziehen der Schraubenfeder am Federbein eines Kraftfahrzeuges, wobei das gesamte Werkzeug derart ausgebildet ist, daß es die Vornahme dieser Arbeiten am eingebauten Federbein des Kraftfahrzeuges mühelos gestattet.

**Tabelle**

| Federdurchmesser (mm) | U-Profil-stücklänge (mm) | Linke Hülse | | Rechte Hülse | |
|---|---|---|---|---|---|
| | | Ungefähre Abweichung der Hülsenachse in Richtung y-Achse | z-Achse | Ungefähre Abweichung der Hülsenachse in Richtung y-Achse | z-Achse |
| 136 | 75 | +12 | +8 | -3 | +7 |
| 143 | 75 | +14 | +10 | -3 | +7 |
| 165 | 110 | +14 | +12 | -3 | -- |

**Patentansprüche**

1. Werkzeug zum Montieren und Demontieren einer Schraubenfeder (1) eines Kraftfahrzeugfederbeines, mit zwei Federspannern (3), von denen jeder eine Gewindespindel (4), an deren einem Ende ein erstes Federeingriffselement (5) angebracht ist, ein auf der Spindel (4) frei verschiebbares zweites Federeingriffselement (6) und ein Schraubelement (19) aufweist, mit dem das zweite Federeingriffselement (6) gegen das erste Federeingriffselement (5) zum Zusammendrücken der Schraubenfeder (1) verschiebbar ist, gekennzeichnet durch einen Distanzhalter (10) zur Verbindung der beiden Federspanner (3), der zwei separate Hülsen (11) aufweist, von denen jeweils eine auf einer der Gewindespindeln (4) der Federspanner (3) zwischen dem entsprechenden Federeingriffselement (6) und dem entsprechenden Schraubelement (19) aufschiebbar ist, und durch einen die Hülsen (11) miteinander verbindenden gekrümmten Bügel (12), der sich im wesentlichen in einer Ebene erstreckt, die parallel zur Verbindungslinie der Angriffspunkte des Bügels (12) am Umfang der Hülsen (11) und senkrecht zu einer parallel zur Achse (2) der Schraubenfeder (1) verlaufenden Ebene liegt, wobei die Angriffspunkte der Bugel (12) die Mittelpunkte der Bügelquerschnitte sind.

2. Werkzeug nach Anspruch 1, dadurch gekennzeichnet, daß die zweiten Federeingriffselemente (6) einen größeren Abstand von der zugehörigen Spindelachse (9) aufweisen als die ersten Federeingriffselemente (5), und daß mindestens eine der Hülsen (11) des Distanzhalters (10) derart an dem Bügel angebracht ist, daß ihre Achse einen spitzen Winkel mit der Normalen zur Bügelebene des Bügels bildet.

3. Werkzeug nach Anspruch 2, dadurch gekennzeichnet, daß die Hülsenachse aus der Senkrechten auf die Bügelebene in einer ersten Ebene, die senkrecht zur Bügelebene und parallel zur Verbindungslinie der Angriffspunkte des Bügels verläuft, bei der oberen Hülse in einem Bereich bis zu 15° und bei der unteren Hülse in einem Bereich bis zu 20°, und/oder in einer zweiten Ebene, die senkrecht zu der ersten Ebene und durch den jeweiligen Angriffspunkt verläuft, bei der oberen Hülse in einem Bereich bis zu 6° und bei der unteren Hülse in einem Bereich bis zu 20° abweicht.

4. Werkzeug nach einem der Ansprüche 1 bis 3, dadurch gekennzeichnet, daß der Bügel (12) des Distanzhalters (10) aus zwei Halbbügeln (13,14) besteht, die gelenkig miteinander verbunden und um eine in den Bügelebenen der Halbbügel (13, 14) und senkrecht zur Verbindungslinie der Angriffspunkte des Bügels am Umfang der Hülsen (11) zwischen den Hülsen (11) verlaufenden Achse um einen begrenzten Schwenkwinkel gegeneinander verschwenkbar sind.

5. Werkzeug nach Anspruch 4, dadurch gekennzeichnet, daß die Halbbügel (13, 14) mit ihren den Hülsen (11) abgewandten Enden gelenkig an der Innenseite der Basis (17) eines U-Profilstückes (15) befestigt sind, dessen Schenkel (18) als Anschläge für die Bewegungsbegrenzung der Halbbügel (1, 14) dienen.

**Claims**

1. Tool for the fitting and removal of the coil spring (1) of a vehicle shock absorbing leg, with two spring clamps (3), each of which has a threaded spindle (4), on one end of which a first spring engaging element (5) is fitted, a second spring engaging element (6), which is freely displaceable on the spindle (4), and a screw element (19), with which the second engaging element (6) can be pushed against the first engaging element (5) to compress the coil spring (1), distinguished by a spacer (10) connecting the two spring clamps (3), which has two separate sleeves (11), each of which can be displaced on one of the threaded spindles (4) of the spring clamps (3) between the corresponding spring engaging element (6) and the corresponding screw element (19), and by a curved yoke (12) connecting the sleeves (11) together, which essentially extends in a plane which lies parallel to the line joining the contact points of the yoke (12) on the periphery of the sleeve (11) and perpendicular to a plane running parallel to the axis (2) of the coil spring (1), where the contact points of the yoke (12) are the mid-points of the yoke cross-sections.

2. Tool as per claim 1, distinguished by the fact that the second spring engaging elements (6) are further away from the associated spindle axis (9) than the first spring engaging elements (5), and that at least one of the sleeves (11) of the spacer (10) is mounted on the yoke in such a way that its axis forms an acute angle with the normal to the yoke plane of the yoke.

3. Tool as per claim 2, distinguished by the fact that the sleeve axis deviates from the perpendicular to the yoke plane in a range of up to 6° for the upper sleeve and in a range of up to 20° for the lower sleeve in a first plane which runs perpendicular to the yoke plane and parallel to the line joining the

EP 0 149 842 B1

contact points of the yoke, and/or in a range of up to 15o for the upper sleeve and in a range of up to 20o for the lower sleeve in a second plane which runs perpendicular to the first plane and through the contact point concerned.

4. Tool, as per one of claims 1 to 3, distinguished by the fact that the yoke (12) of the spacer (10) consists or two half-yokes (13, 14), which are jointed together and can be pivoted in opposite directions through a limited pivoting angle, around an axis running between the sleeves (11) in the yoke planes of the half-yokes (13, 14) and perpendicular to the line joining the contact points of the yoke on the periphery of the sleeves (11).

5. Tool as per claim 4, distinguished by the fact that the half-yokes (13, 14) are flexibly fastened, by their ends away from the sleeves (11), to the inside of the base (17) of a U-profile piece (15), the shanks of which (18) act as stops to limit the movement of the half-yokes (13, 14).

**Revendications**

1. Outil pour le montage et le démontage d'un ressort à boudin (1) d'une jambe de force à ressort d'un véhicule automobile, comportant deux dispositifs de tension de ressort (3) dont chacun présente une tige filetée (4), à une extrémité de laquelle est monté un premier élément de prise de ressort (5), un second élément de prise de ressort (6) qui peut être déplacé librement sur la tige (4) et un élément à visser (19) par lequel le second élément de prise de ressort (6) peut être déplacé vers le premier élément de prise à ressort (5) pour comprimer le ressort à boudin (1), caractérisé par un dispositif de maintien de distance (10), pour la liaison des deux dispositifs de tension de ressort (3), qui présente deux manchons séparés (11) dont chaque fois un manchon peut être déplacé sur une des tiges filetées (4) du dispositif de tension de ressort (3) entre l'élément de prise de ressort (6) correspondant et l'élément a visser (19) correspondant, et par un arceau (12) courbé qui relie l'un à l'autre les manchons (11) et qui s'étend sensiblement dans un plan qui est parallèle à la ligne de liaison des points d'attaque de l'arceau (12) à la périphérie des manchons (11) et est perpendiculaire à un plan s'étendant parallèlement à l'axe (2) du ressort à boudin (1), les points d'attaque de l'arceau (12) étant les centres des sections transversales d'arceau.

2. Outil suivant la revendication 1, caractérisé en ce que les seconds éléments de prise de ressort (6) présentent une distance à partir de l'axe de tige (9) correspondant supérieure à celle des premiers éléments de prise de ressort (5) et en ce qu'au moins un des manchons (11) du dispositif de maintien de distance (10) est monté sur l'arceau de façon que son axe forme un angle aigu avec les perpendiculaires au plan de l'arceau.

3. Outil suivant la revendication 2, caractérisé en ce que l'axe de manchon s'écarte des perpendiculaires sur le plan d'arceau, dans un premier plan qui s'étend perpendiculairement au plan d'arceau et parallèlement à la ligne de liaison des points d'attaque de l'arceau, pour le manchon supérieur dans une plage allant jusqu'à 15° et pour le manchon inférieur dans une plage allant jusqu'à 20°, et/ou dans un second plan qui s'étend perpendiculairement au premier plan et passe par le point d'attaque respectif, pour le manchon supérieur dans une plage allant jusqu'à 6° et pour le manchon inférieur dans une plage allant jusqu'à 20°.

4. Outil suivant l'une quelconque des revendications 1 à 3, caractérisé en ce que l'arceau (12) du dispositif de maintien de distance (10) est constitué de deux demi-arceaux (13, 14) qui sont reliés l'un à l'autre de façon articulée et peuvent être pivotés l'un par rapport à l'autre, d'un angle de pivotement limité, autour d'un axe s'étendant entre les manchons (11) dans les plans d'arceau des demi-arceaux (13, 14) et perpendiculairement à la ligne de liaison des points d'attaque de l'arceau à la périphérie des manchons (11).

5. Outil suivant la revendication 4, caractérisé en ce que les demi-arceaux (13, 14) sont fixés de façon articulée, à leurs extrémités écartées des manchons (11), sur la face interne de la base (17) d'un élément de profilé en U (15) dont les ailes (18) servent de butées pour la limitation de mouvement des demi-arceaux (13, 14).

8

_Fig.1_

Fig.2

Fig.3

Fig. 4